# EUROPÄISCHE PATENTSCHRIFT

(11) **EP 1 570 727 B1**
(45) Veröffentlichungstag und Bekanntmachung des Hinweises auf die Patenterteilung: **14.04.2010**
(21) Anmeldenummer: 04400041.2
(22) Anmeldetag: 30.08.2004
(51) Int. Cl.: A01G 9/24, A01G 25/16

(54) **Bewässerungsvorrichtung zum Bewässern von Pflanzenbehältnissen und damit gebildete Bewässerungsanordnung**
Irrigation device for plant pots and irrigation system containing such an irrigation device
Dispositif d'irrigation des pots de plants et system d'irrigation comprennant ce dispositif d'irrigation

(30) Priorität: 03.03.2004 DE 202004003486 U
(43) Veröffentlichungstag der Anmeldung: 07.09.2005
(73) Patentinhaber: Korte, Hermann, Dipl.-Ing., 26903 Surwold (DE)
(72) Erfinder: Korte, Hermann, Dipl.-Ing., 26903 Surwold (DE); Schomaker, Rudolf, 49751 Sögel (DE); Trinzcek, Reinhold, 21493 Grabau (DE)
(74) Vertreter: Philipp, Matthias

(56) Entgegenhaltungen:
- DE-U1- 20 213 719
- US-A- 3 199 784
- US-A- 4 130 135
- US-A1- 2003 154 652
- US-B1- 6 568 610

## Beschreibung

Die Erfindung bezieht sich auf eine Bewässerungsvorrichtung gemäß dem Oberbegriff des Anspruchs 1 zum Bewässern von Pflanzenbehältnissen, wobei sich die Bewässerungsvorrichtung insbesondere zum Bewässern von mit mehreren regalartig übereinander angeordneten Lagerungsplattformen für Pflanzen versehenen Transportcontainern (Rollcontainern) eignet.

Eine Bewässerung, die den unterschiedlichen Anforderungen einzelner Pflanzenarten und -größen gerecht wird, ist im Pflanzenhandel schwierig und zeit- und arbeitsaufwendig, wenn die einzelnen Pflanzen in Töpfen o. ä. auf Rollcontainern angeordnet sind, da jeder einzelne Rollcontainer mit einer bestimmten Wassermenge zu versorgen ist, die im Einzelfall von Rollcontainer zu Rollcontainer abweichen kann.

Wenn die Lagerungsplattformen der Rollcontainer wannenartig und mit Überläufen versehen sind, ergibt sich bereits eine erhebliche Verringerung des Bewässerungsaufwands, weil dann nur noch die jeweils oberste Lagerungsplattform bewässert werden muß und aufgrund des Überlaufeffekts die darunter liegenden Plattformen und Pflanzen automatisch Wasser erhalten. Allerdings ist auch in diesem Fall eine geregelte Wasserzuführung für jeden Rollcontainer erforderlich.

US 3, 199,784 zeigt eine Vorrichtung zum Bewässern von Pflanzen mit einem Verteilrohr, von dem zahlreiche Verteilleitungen abzweigen, die an ihren Enden jeweils mit einem Gewicht beschwert sind.

Die Aufgabe der Erfindung besteht darin, eine einfach zu handhabende und umsetzbare Bewässerungsvorrichtung zum Bewässern von Pflanzenbehältnissen zu schaffen, insbesondere zum Bewässern von Rollcontainern mit übereinander angeordneten Lagerungsplattformen, die wannenartig ausgebildet und mit Überläufen versehen sind.

Diese Aufgabe wird erfindungsgemäß durch eine Bewässerungsvorrichtung zum Bewässern von Pflanzenbehältnissen gelöst, mit einem an eine Wasserleitung anschließbaren Verteilkopf und mehreren von dem Verteilkopf abgehenden und frei endenden Abgabeleitungen, wobei mindestens einer Abgabeleitung eine Halterung zugeordnet ist, mit der die Vorrichtung auf oder an einen Rand eines oder mehrerer Pflanzenbehältnisse aufleg- oder einhängbar ist, wobei mindestens eine Abgabeleitung aus einem formstabilen Material besteht und die Halterung bildet.

Bevorzugt bildet jede Abgabeleitung eine Halterung.

Bevorzugt sieht die Erfindung vor, daß die Halterungen flexibel, frei verformbar und formstabil sind, so daß sie verformt werden können, aber dennoch eine Tragkraft übernehmen können.

Die Halterungen können rohrförmig sein, und sie können aus einem rohrförmig gewundenen Metallprofil gebildet sein. Weiter kann vorgesehen sein, daß die Abgabeleitungen durch eine wasserdichte Innenfläche der Halterungen gebildet sind, insbesondere durch in den Halterungen angeordnete Schlauchleitungen.

Bevorzugt sieht die Erfindung vor, daß die Abgabeleitungen verdrehbar in dem Verteilkopf gehalten sind.

Die Abgabeleitungen können eine C- oder U-Form aufweisen oder in eine solche bringbar sein.

Es kann vorgesehen sein, daß der Ventilkopf eine Kopfplatte mit Bohrungen aufweist, wobei in jeder Bohrung eine Abgabeleitung abgedichtet und verdrehbar gehalten ist.

Im Bereich eines mit der Wasserleitung verbindbaren Anschlußendes des Verteilkopfs kann ein zentrales Absperrventil angeordnet sein. Alternativ oder zusätzlich kann im Bereich eines mit der Wasserzuleitung verbindbaren Anschlußendes des Verteilkopfs ein zeitgesteuertes Absperrventil als Bewässerungstimer angeordnet sein. Es kann sowohl der Zeitpunkt, bspw. eine feste Uhrzeit, als auch die zu diesem Zeitpunkt abzugebende Wassermenge oder Bewässerungszeit steuerbar sein.

Weiterhin kann vorgesehen sein, daß jeder Abgabeleitung ein individuelles Absperrventil zugeordnet ist, welches ebenfalls im oben beschriebenen Sinn zeitgesteuert sein kann.

Erfindungsgemäß kann ferner vorgesehen sein, daß mindestens eine der Abgabeleitungen verlängerbar ist, insbesondere teleskopartig und bevorzugt an ihrem freien Ende teleskopartig verlängerbar ist. Damit besteht die Möglichkeit, bei der Bewässerung von Rollwagen, deren oberste Lagerungsplattformen in unterschiedlicher Höhe angebracht sind, das Mündungsende der Abgabeleitungen jeweils unmittelbar in Höhe der einzelnen Lagerungsplattformen anzuordnen. Konstruktiv könnte die Ausziehbarkeit beispielsweise dadurch ermöglicht werden, daß die oder jede Abgabeleitung mit mehreren teleskopartig ineinanderschiebbaren bzw. ausziehbaren Rohrstücken unterschiedlichen Durchmessers versehen ist.

Die Aufgabe der Erfindung wird ferner gelöst durch eine Bewässerungsanordnung mit einer oder mehreren Bewässerungsvorrichtungen nach der Erfindung, mit einer Aufstellfläche für Pflanzentransportwagen, über der mit vertikalem Abstand eine horizontale Führungsschiene und eine Wasserleitung angeordnet sind, wobei jede Bewässerungsvorrichtung über eine flexible Anschlußleitung mit der Wasserleitung verbunden und an der Führungsschiene aufgehängt und innerhalb eines Verschiebebereichs horizontal verschieblich geführt ist. Wenn, wie bevorzugt vorgesehen, mehrere Bewässerungsvorrichtungen angeschlossen sind, sind deren flexible Anschlußleitungen in gegenseitigen Abständen mit der Wasserleitung verbunden.

Zum Schutz der auf den Pflanzentransportwagen angeordneten Pflanzen kann über der Führungsschiene ein Dach angeordnet sein.

Bevorzugt ist vorgesehen, daß die Wasserleitung mit einer Zeitsteuerung versehen ist, um unter der Führungsschiene aufgestellte Pflanzentransportwagen zu festgelegten Zeiten und während festgelegter Zeitdauern oder mit festgelegten Wassermengen zu bewässern. Alternativ oder zusätzlich können die Bewässerungsvorrichtungen mit den vorstehend genannten Zeitsteuerungen (zeitlich gesteuerten Absperrventilen) versehen sein.

Weitere Vorteile und Merkmale der Erfindung ergeben sich aus der nachfolgenden Beschreibung eines Ausführungsbeispiels einer Bewässerungsvorrichtung und einer Bewässerungsanordnung, wobei auf eine Zeichnung Bezug genommen ist, in der
Fig. 1 eine Seitenansicht einer erfindungsgemäßen Bewässerungsvorrichtung zeigt,
Fig. 2 eine perspektivische Ansicht der Bewässerungsvorrichtung nach Fig. 1 im Einsatz bei der Bewässerung von vier Rollcontainern zeigt,
Fig. 3 eine schematische vergrößerte Längsschnittansicht der Bewässerungsvorrichtung nach Fig. 1 zeigt,
Fig. 4 eine perspektivische Ansicht eines Ausschnitts aus einer erfindungsgemäßen Bewässerungsanordnung zeigt,
Fig. 5 einen erweiterten Ausschnitt aus der Bewässerungsanordnung nach Fig. 4 in etwas verkleinertem Maßstab zeigt,
Fig. 6 eine Vorderansicht der Bewässerungsanordnung nach Fig. 4 und 5 zeigt, und
Fig. 7 eine ausschnittsweise Draufsicht auf die Bewässerungsanordnung nach Fig. 4 bis 6 zeigt.

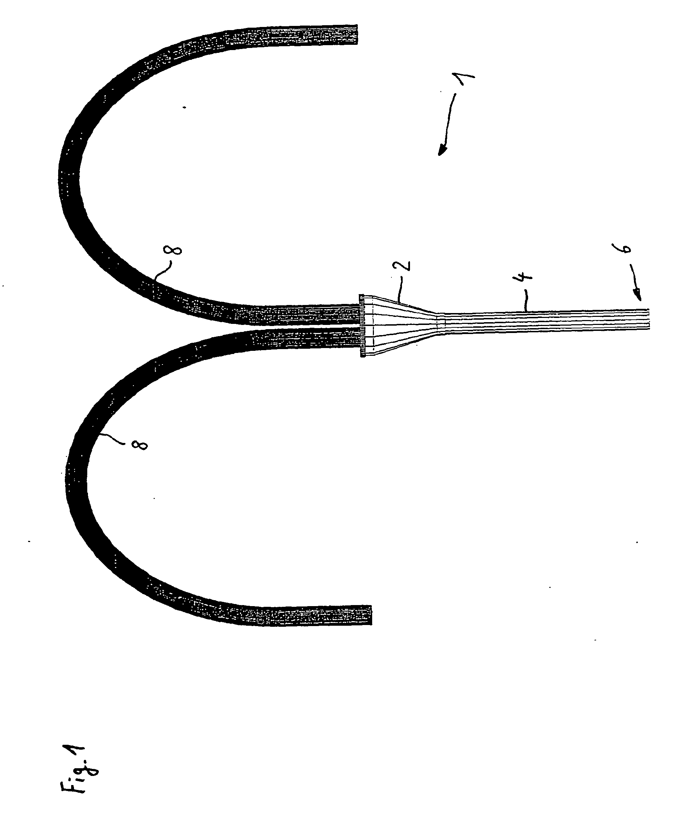

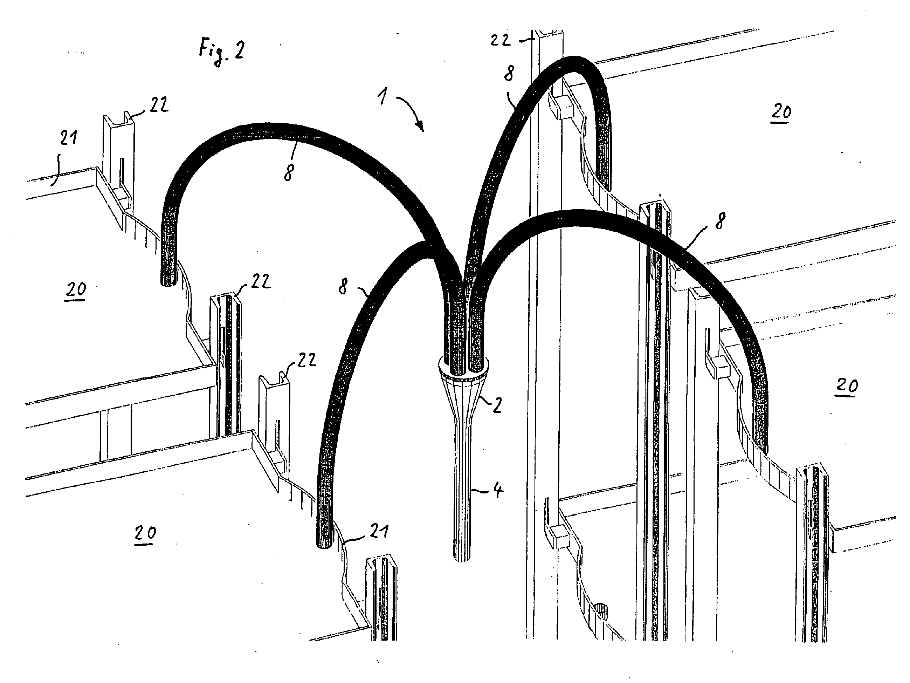

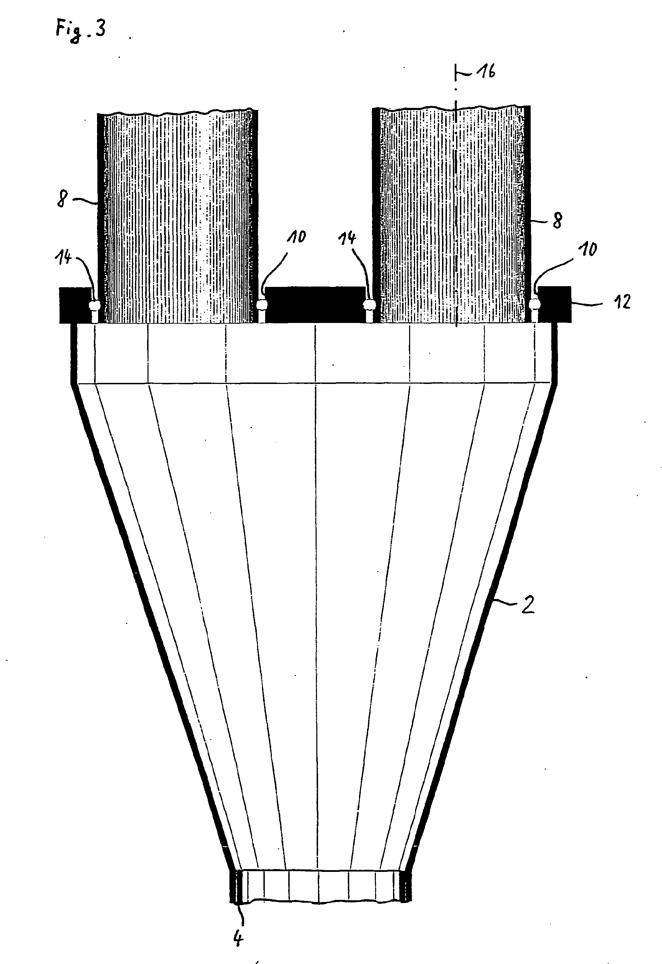

Zunächst sei auf Fig. 1 bis 3 Bezug genommen, die eine im ganzen mit 1 bezeichnete, erfindungsgemäße Bewässerungsvorrichtung erläutern. Fig. 1 zeigt eine Seitenansicht und Fig. 2 eine perspektivische Ansicht schräg von oben, wobei man zunächst einen Verteilkopf 2 erkennt, an den einerseits unten ein Anschlußrohr 4 mit einem Anschlußende 6 und andererseits oben eine Anzahl von (in diesem Beispiel vier) Abgabeleitungen 8 angeordnet sind. Wie aus Fig. 3 hervorgeht, die einen Längsschnitt eines Teils der Abgabeleitungen 8, des Verteilkopfs 2 und eines Teils des Anschlußrohrs 4 in vergrößertem Maßstab zeigt, sind die Abgabeleitungen 8 mit ihren unteren freien Endabschnitten in Bohrungen 10 einer Kopfplatte 12 des Verteilkopfs 2 eingesetzt, wobei zur Abdichtung zwischen Innenflächen der Bohrungen 10 und Außenflächen der Abgabeleitungen 8 jeweils ein Dichtungsring 14 eingesetzt ist. Aufgrund dieser Anordnung ist jede Abgabeleitung 8 um eine Längsachse 16 der ihr zugeordneten Bohrung 10 drehbar, so daß eine Anpassung an unterschiedliche Geometrien von Pflanzenbehältnissen möglich ist.

Wie Fig. 3 weiter zeigt, ist der Verteilkopf 2 als rotationssymmetrischer Hohlkörper ausgebildet, der an seinem oberen Ende mit der Kopfplatte 12 abgeschlossen und an seinem unteren Ende mit dem Anschlußrohr 4 verbunden ist. Auf diese Weise ergibt sich eine gleichmäßige Durchflußverteilung von Wasser, das durch das Anschlußrohr 4 zugeführt wird, auf die vier Abgabeleitungen 8.

Die Abgabeleitungen 8 sind in der hier beschriebenen Ausführungsform aus einem formstabilen Material ausgebildet, das dennoch flexibel und in gewissen Grenzen frei verformbar ist, so daß jede einzelne Abgabeleitung 8 in eine gewünschte Form gebogen werden kann, insbesondere in die in Fig. 1 und 2 dargestellte C- bzw. U-Form. Aufgrund der formstabilen Ausführung der Abgabeleitungen bilden diese gleichzeitig Halterungen für die Bewässerungsvorrichtung als ganzes, so daß diese, wie in Fig. 2 dargestellt ist, mit Hilfe der haken- bzw. halterungsartig gebogenen Abgabeleitungen 8 auf einzelne Pflanzenbehältnisse 20 aufgesetzt bzw. über deren Rand oder Seitenwand 21 eingehängt werden kann.

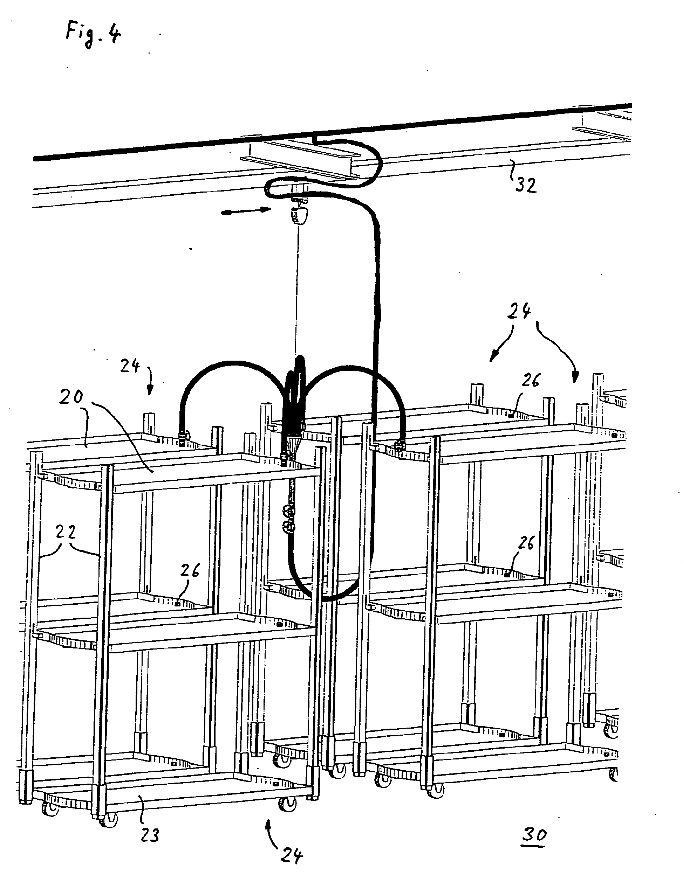

Die Pflanzenbehältnisse 20 sind hierbei wannenartig ausgebildete Lagerungsplattformen, die regalartig übereinander an Gestellstreben 22 gehalten sind. Wie Fig. 4 bis 6 zeigen, bilden mehrere Pflanzenbehältnisse bzw. Lagerungsplattformen 20 und jeweils vier Gestellstreben 22 sowie eine mit Rollen versehene Bodenplattform 23 einen Transportcontainer oder Rollwagen 24.

Die Abgabeleitungen 8 können bspw. dadurch flexibel ausgebildet sein, daß sie aus einem schraubenförmig gewundenen Metallprofil gebildet sind, das innenseitig wasserdicht abgedichtet ist oder in dessen Innerem eine Schlauchleitung geführt ist.

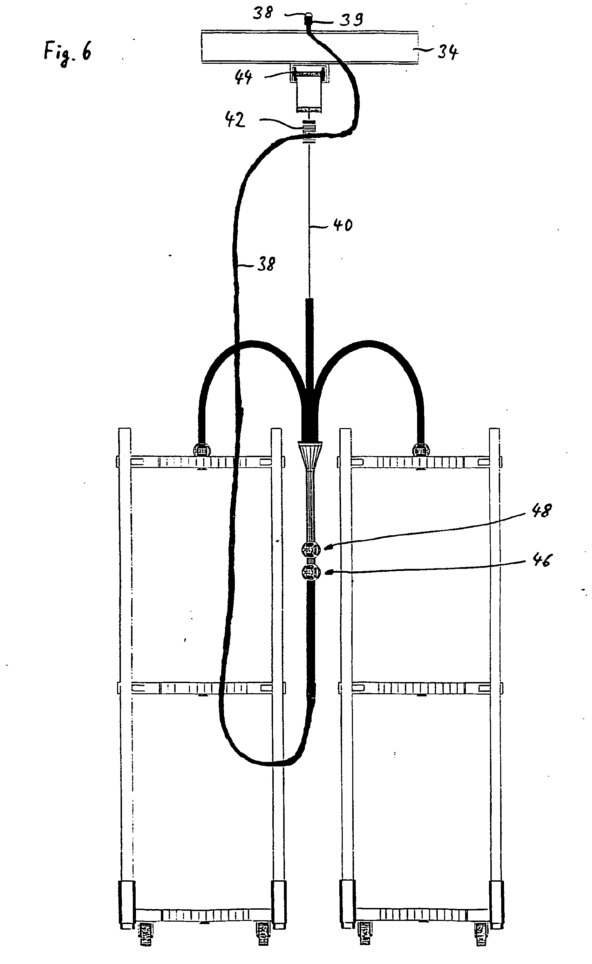

Es ist zweckmäßig, wenn in dem Anschlußrohr 4 ein zentrales Absperrventil 46 (Fig. 6) vorgesehen ist, möglicherweise ergänzt durch ein weiteres, zeitgesteuertes Absperrventil 48 (Fig. 6, Bewässerungstimer), so daß die Bewässerungsvorrichtung 1 einerseits komplett abgesperrt werden kann und andererseits, im nicht abgesperrten Zustand, durch den Bewässerungstimer eine zeitlich gesteuerte Bewässerung derjenigen vier Rollwagen 24 ausführen kann, in deren oberste Lagerungsplattformen sie eingehängt ist.

Weiterhin kann es zweckmäßig sein, wenn in jeder einzelnen Abgabeleitung 8 ein individuelles Absperrventil vorgesehen ist, welches auch als individueller Bewässerungstimer ausgebildet sein könnte. Auf diese Weise ist es möglich, die vier der Bewässerungsvorrichtung 1 zugeordneten Rollwagen 24 nach einer individuellen, jeweils unterschiedlichen Zeitsteuerung mit unterschiedlichen Wassermengen und/oder zu unterschiedlichen Zeiten zu bewässern.

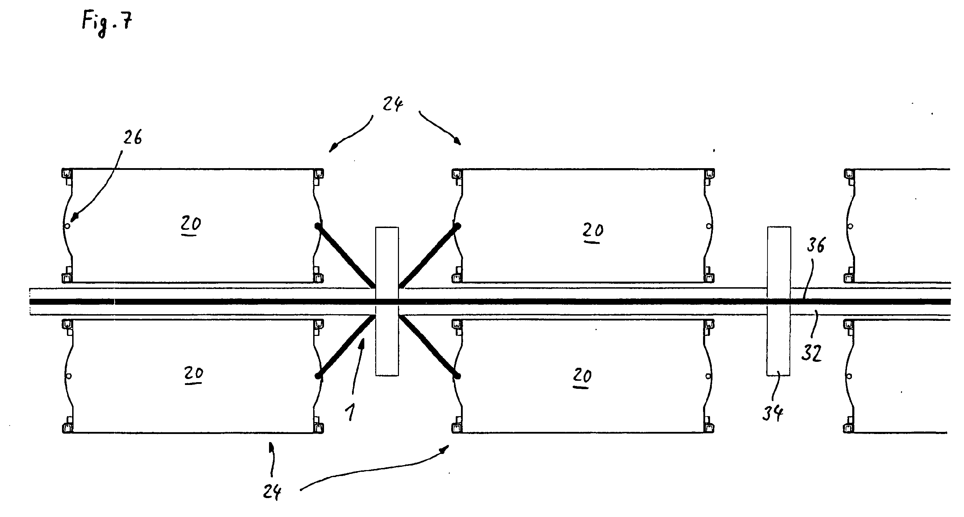

Wie Fig. 4 und die Draufsicht nach Fig. 7 weiter zeigen, ist jedes Pflanzenbehältnis bzw. jede Lagerungsplattform 20 mit einem Überlauf 26 versehen, der nach Erreichen eines vorbestimmten Wasserstands ein überlaufen des Wassers in das jeweils darunter liegende Pflanzenbehältnis bzw. Lagerungsplattform 20 freigibt, so daß sukzessive von oben her alle Lagerungsplattformen 20 bewässert werden.

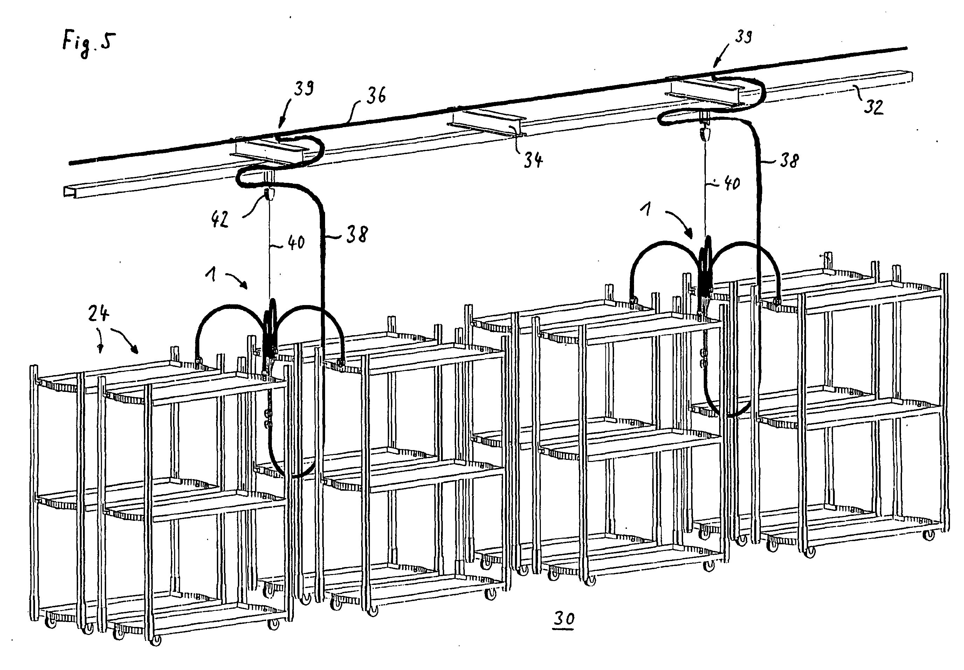

Fig. 4 bis 6 zeigen die Aufhängung der einzelnen Bewässerungsvorrichtungen 1 an einer mit Abstand oberhalb einer Stellfläche 30 der Rollwagen 24 horizontal angeordneten Trag- und Führungsschiene 32, wobei je nach Anzahl der zu versorgenden Rollwagen 24 die erforderliche Anzahl von Bewässerungsvorrichtungen 1 mit gegenseitigem Abstand (Fig. 5) hintereinander an der entsprechend lang ausgebildeten Führungsschiene 32 gehalten ist.

Wie insbesondere Fig. 5 und 6 zu entnehmen ist, ist die Führungsschiene 32 mit Hilfe von in gegenseitigen Abständen angeordneten Querteilen 34 an einer nicht dargestellten Hallendekke, Dach o. ä. befestigt, wobei parallel und benachbart zu der Führungsschiene 32 eine Wasserleitung 36 verlegt ist, an die die Bewässerungsvorrichtungen 1 mit Hilfe einer flexiblen Schlauchleitung 38 bei 39 angeschlossen sind. Jede Bewässerungsvorrichtung 1 hängt an einem Tragseil 40, das je nach Bedarf aus einer Seiltrommel 42 abwickelbar bzw. in diese zurückspülbar ist, wobei die Seiltrommel 42 ihrerseits an Rollen 44 innerhalb der doppelt C-förmig gestalteten Führungsschiene 32 gehalten und längsverschieblich geführt ist. Wenn eine Bewässerungsvorrichtung nicht benötigt wird, hängt sie somit an dem Seil 42 in einer zweckmäßigen Griffhöhe in Bereitschaft.

Fig. 7 zeigt die Bewässerungsanordnung schematisch in einer Draufsicht von oben, wobei die Wasserleitung 36, die Führungsschiene 32, eine Bewässerungsvorrichtung 1 mit ihren vier Abgabeleitungen 8 sowie die der Bewässerungsvorrichtung 1 zugeordneten und von dieser bewässerten vier Rollwagen 24 zu sehen sind. Die Schlauchleitung 38 (siehe auch Fig. 5) ist bevorzugt mindestens so lang, daß von jeder Bewässerungsvorrichtung 1 einerseits diejenige Vierergruppe von Rollwagen 24 bewässerbar ist, die sich unmittelbar unterhalb der Verbindung der Schlauchleitung 38 mit der Wasserleitung 36 befindet (in Fig. 5 links und rechts), aber alternativ auch jede der links unmittelbar seitlich benachbart dazu befindlichen Vierergruppen von Rollwagen (in Fig. 5 in der Mitte).

Zwecks Wiederverwendung des aus den untersten Lagerungsplattformen abfließenden Wassers kann vorgesehen sein, daß dieses im Bereich der Stellfläche 30 aufgefangen, gesammelt und nach Ergänzung mit Frischwasser, ggf. unter Hinzufügung von Düngemitteln, Nährlösungen etc., in die Wasserleitung 36 eingespeist wird.

### Bezugszeichenliste

- 1: Bewässerungsvorrichtung
- 2: Verteilkopf
- 4: Anschlußrohr
- 6: Anschlußende
- 8: Abgabeleitung
- 10: Bohrung
- 12: Kopfplatte
- 14: Dichtring
- 16: Längsachse (von 10)
- 20: Pflanzenbehältnis/Lagerungsplattform
- 21: Seitenwand
- 22: Gestellstrebe
- 23: Bodenplattform
- 24: Rollwagen
- 26: Überlauf
- 30: Stellfläche
- 32: Führungsschiene
- 34: Querteil
- 36: Wasserleitung
- 38: Schlauchleitung
- 39: Verbindung von 38 mit 36
- 40: Tragseil
- 42: Seiltrommel
- 44: Rollen
- 46: Absperrventil
- 48: zeitgesteuertes Absperrventil

## Patentansprüche

1. Bewässerungsvorrichtung (1) zum Bewässern von Pflanzenbehältnissen (20; 24), mit einem an eine Wasserleitung (36) anschließbaren Verteilkopf (2) und mehreren von dem Verteilkopf (2) abgehenden und frei endenden Abgabeleitungen (8), wobei mindestens einer Abgabeleitung (8) eine Halterung zugeordnet ist, **dadurch gekennzeichnet, daß** die Vorrichtung (1) mit der Halterung auf oder an einen Rand eines oder mehrerer Pflanzenbehältnisse (20; 24) aufleg- oder einhängbar ist, wobei die mindestens eine Abgabeleitung (8) aus einem formstabilen Material besteht und die Halterung bildet.

2. Bewässerungsvorrichtung nach Anspruch 1,**dadurch gekennzeichnet, daß** jede Abgabeleitung (8) eine Halterung bildet.

3. Bewässerungsvorrichtung nach einem der vorangehenden Ansprüche, **dadurch gekennzeichnet, daß** die Halterungen flexibel, frei verformbar und formstabil sind.

4. Bewässerungsvorrichtung nach einem der vorangehenden Ansprüche, **dadurch gekennzeichnet, daß** die Halterungen rohrförmig sind.

5. Bewässerungsvorrichtung nach einem der vorangehenden Ansprüche, **dadurch gekennzeichnet, daß** die Halterungen aus schraubenförmig gewundenem Metallprofil gebildet sind.

6. Bewässerungsvorrichtung nach Anspruch 4 oder 5, **dadurch gekennzeichnet, daß** die Abgabeleitungen (8) durch eine wasserdichte Innenfläche der Halterungen gebildet sind, insbesondere durch in den Halterungen angeordnete Schlauchleitungen.

7. Bewässerungsvorrichtung nach einem der vorangehenden Ansprüche, **dadurch gekennzeichnet, daß** die Abgabeleitungen (8) verdrehbar in dem Verteilkopf (2) gehalten sind.

8. Bewässerungsvorrichtung nach einem der vorangehenden Ansprüche, **dadurch gekennzeichnet, daß** die Abgabeleitungen (8) eine C- oder U-Form aufweisen oder in eine solche bringbar sind.

9. Bewässerungsvorrichtung nach einem der vorangehenden Ansprüche, **dadurch gekennzeichnet, daß** der Verteilkopf (2) eine Kopfplatte (12) mit Bohrungen (10) aufweist, wobei in jeder Bohrung (10) eine Abgabeleitung (8) abgedichtet und verdrehbar gehalten ist.

10. Bewässerungsvorrichtung nach einem der vorangehenden Ansprüche, **dadurch gekennzeichnet, daß** im Bereich eines mit der Wasserleitung (36) verbindbaren Anschlußendes (6) des Verteilkopfs (2) ein zentrales Absperrventil (46) angeordnet ist.

11. Bewässerungsvorrichtung nach einem der vorangehenden Ansprüche, **dadurch gekennzeichnet, daß** im Bereich eines mit der Wasserleitung (36) verbindbaren Anschlußendes (6) des Verteilkopfs (2) ein zeitgesteuertes Absperrventil (48) als Bewässerungstimer angeordnet ist.

12. Bewässerungsvorrichtung nach einem der vorangehenden Ansprüche, **dadurch gekennzeichnet, daß** jeder Abgabeleitung (8) ein insbesondere zeitgesteuertes Absperrventil zugeordnet ist.

13. Bewässerungsvorrichtung nach einem der vorangehenden Ansprüche, **dadurch gekennzeichnet, daß** mindestens eine der Abgabeleitungen (8), insbesondere an ihrem freien Ende, teleskopartig verlängerbar ist.

14. Bewässerungsanordnung mit einer oder mehreren Bewässerungsvorrichtungen (1) nach einem der vorangehenden Ansprüche, mit einer Aufstellfläche (30) für Pflanzentransportwagen (24), über der mit vertikalem Abstand eine horizontale Führungsschiene (32) und eine Wasserleitung (36) angeordnet sind, wobei jede Bewässerungsvorrichtung (1) über eine flexible Anschlußleitung (38), ggf. in gegenseitigen Abständen, mit der Wasserleitung (36) verbunden und an der Führungsschiene (32) aufgehängt und innerhalb eines Verschiebebereichs horizontal verschieblich geführt ist.

15. Bewässerungsanordnung nach Anspruch 14, **dadurch gekennzeichnet, daß** über der Führungsschiene (32) ein Dach angeordnet ist.

16. Bewässerungsanordnung nach Anspruch 14 oder 15, **dadurch gekennzeichnet, daß** die Wasserleitung (36) mit einer Zeitsteuerung versehen ist, um unter der Führungsschiene (32) aufgestellte Pflanzentransportwagen (24) zu festgelegten Zeiten und während festgelegter Zeitdauern und/oder mit festgelegten Wassermengen zu bewässern.

## Claims

1. Watering device (1) for watering plant containers (20; 24), said device having a distributing head (2), which can be connected to a water line (36), and a number of dispensing lines (8) which emanate from said distributing head (2) and terminate in an unattached manner, wherein a holding arrangement is associated with at least one dispensing line (8), **characterised in that** the device (1) can be placed on, or hooked onto, a rim of one or more plant containers (20; 24) by means of the holding arrangement, the at least one dispensing line (8) consisting of a dimensionally stable material and forming the holding arrangement.

2. Watering device according to claim 1, **characterised in that** each dispensing line (8) forms a holding arrangement.

3. Watering device according to one of the preceding claims, **characterised in that** the holding arrangements are flexible, freely deformable and dimensionally stable.

4. Watering device according to one of the preceding claims, **characterised in that** the holding arrangements are tubular.

5. Watering device according to one of the preceding claims, **characterised in that** the holding arrangements are formed from helically wound metal section.

6. Watering device according to claim 4 or 5, **characterised in that** the dispensing lines (8) are formed by a watertight inner face of the holding arrangements, in particular by hose lines arranged in said holding arrangements.

7. Watering device according to one of the preceding claims, **characterised in that** the dispensing lines (8) are held in a twistable manner in the distributing head (2).

8. Watering device according to one of the preceding claims, **characterised in that** the dispensing lines (8) have, or can be brought into, the shape of a C or a U.

9. Watering device according to one of the preceding claims, **characterised in that** the distributing head (2) has a head plate (12) with bores (10), a dispensing line (8) being held in each bore (10) in a sealed-off and twistable manner.

10. Watering device according to one of the preceding claims, **characterised in that** a central shut-off valve (46) is arranged in the region of a connecting end (6) of the distributing head (2), which connecting end can be connected to the water line (36).

11. Watering device according to one of the preceding claims, **characterised in that** a time-controlled shut-off valve (48) is arranged, as a watering timer, in the region of a connecting end (6) of the distributing head (2), which connecting end can be connected to the water line (36).

12. Watering device according to one of the preceding claims, **characterised in that** a shut-off valve, in particular a time-controlled shut-off valve, is associated with each dispensing line (8).

13. Watering device according to one of the preceding claims, **characterised in that** at least one of the dispensing lines (8) can be extended, particularly at its unattached end, in a telescope-like manner.

14. Watering arrangement having one or more watering devices (1) according to one of the preceding claims, said arrangement having a setting-up surface (30) for plant-transporting carriages (24), above which surface a horizontal guide rail (32) and a water line (36) are arranged with a vertical interval, wherein each watering device (1) is connected to the water line (36) via a flexible connecting line (38), optionally at intervals from one another, and suspended from the guide rail (32), and is guided so as to be horizontally displaceable within a range of displacement.

15. Watering arrangement according to claim 14, **characterised in that** a roof is arranged above the guide rail (32).

16. Watering arrangement according to claim 14 or 15, **characterised in that** the water line (36) is provided with a time-control system in order to water plant-transporting carriages (24) set up underneath the guide rail (32) at set times and for set periods of time and/or with set quantities of water.

## Revendications

1. Dispositif d'irrigation (1), pour irriguer des pots à plante (20 ; 24) avec une tête de distribution (2), susceptible d'être raccordée à une conduite d'eau (36), et plusieurs conduites d'évacuation (8), partant de la tête de distribution (2) et à terminaison libre, à au moins une conduite d'évacuation (8) étant associée une fixation, **caractérisé en ce que** le dispositif (1) est susceptible d'être posé ou accroché sur ou à un bord d'un ou plusieurs pots à plante (20 ; 24), la au moins une conduite d'évacuation (8) étant composée d'un matériau à stabilité de forme et formant la fixation.

2. Dispositif d'irrigation selon la revendication 1, **caractérisé en ce que** chaque conduite d'évacuation (8) forme une fixation.

3. Dispositif d'irrigation selon l'une des revendications précédentes, **caractérisé en ce que** les fixations sont flexibles, déformables librement et présentent une stabilité de forme.

4. Dispositif d'irrigation selon l'une des revendications précédentes, **caractérisé en ce que** les fixations sont en forme de tubes.

5. Dispositif d'irrigation selon l'une des revendications précédentes, **caractérisé en ce que** les fixations sont formées de profilé métallique enroulé en forme d'hélice.

6. Dispositif d'irrigation selon l'une des revendications 4 ou 5, **caractérisé en ce que** les conduites d'évacuation (8) sont formées par une surface intérieure, étanche à l'eau, des fixations, en particulier par des conduites en tuyau flexible disposées dans les fixations.

7. Dispositif d'irrigation selon l'une des revendications précédentes, **caractérisé en ce que** les conduites d'évacuation (8) sont maintenues, avec possibilité de rotation, dans la tête de distribution (2).

8. Dispositif d'irrigation selon l'une des revendications précédentes, **caractérisé en ce que** les conduites d'évacuation (8) présentent une forme en C ou en U, ou sont susceptibles d'être mises à une telle forme.

9. Dispositif d'irrigation selon l'une des revendications précédentes, **caractérisé en ce que** la tête de distribution (2) présente une plaque de tête (12) avec des perçages (10), une conduite d'évacuation (8) étant maintenue, isolée de manière étanche et avec possibilité de rotation, dans chaque perçage (10).

10. Dispositif d'irrigation selon l'une des revendications précédentes, **caractérisé en ce qu'**une soupape d'isolement (46) centrale est disposée dans la zone d'une extrémité de raccordement (6), susceptible d'être reliée à la conduite d'eau (36), de la tête de distribution (2).

11. Dispositif d'irrigation selon l'une des revendications précédentes, **caractérisé en ce qu'**une soupape d'isolement (48) à commande temporelle est disposée, en tant que minuteur d'irriguation, dans la zone d'une extrémité de raccordement (6), susceptible d'être reliée à la conduite d'eau (36), de la tête de distribution (2).

12. Dispositif d'irrigation selon l'une des revendications précédentes, **caractérisé en ce qu'**une soupape d'isolement, en particulier à commande temporelle, est associée à chaque conduite d'évacuation (8).

13. Dispositif d'irrigation selon l'une des revendications précédentes, **caractérisé en ce qu'**au moins l'une des conduite d'évacuation (8) est susceptible d'être prolongée de manière télescopique, en particulier à son extrémité libre.

14. Système d'irrigation comprenant un ou plusieurs dispositifs d'irrigation (1) selon l'une des revendications précédentes, avec une face de pose (30), pour des chariots de transport de plantes (24), sur laquelle sont disposées, selon un espacement vertical, une glissière de guidage (32) horizontale et une conduite d'eau (36), chaque dispositif d'irrigation (1) étant relié, par l'intermédiaire d'une conduite de raccordement (38) flexible, le cas échéant selon des espacements mutuels, à la conduite d'eau (36) et suspendu à la glissière de guidage (32) et guidé de manière mobile horizontalement dans les limites d'une plage de déplacement.

15. Système d'irrigation selon la revendication 14, **caractérisé en ce qu'**un toit est disposé au-dessus de la glissière de guidage (32).

16. Système d'irrigation selon la revendication 14 ou 15, **caractérisé en ce que** la conduite d'eau (36) est munie d'une commande temporelle, pour irriguer des chariots de transport de plante (24) installés sous la glissière de guidage (32), à des moments fixés et pendant des durées fixées et/ou avec des quantités d'eau fixées.
